# FASCICULE DE BREVET EUROPEEN

(11) **EP 1 444 113 B1**
(45) Date de publication et mention de la délivrance du brevet: **20.07.2005**
(21) Numéro de dépôt: 02796846.0
(22) Date de dépôt: 15.11.2002
(51) Int. Cl.: B60R 13/10

(54) **PROCEDE DE FABRICATION D'UNE PLAQUE MINERALOGIQUE DE TYPE DOUBLE SANS BORDURE, ET LA PLAQUE MINERALOGIQUE OBTENUE**
HERSTELLUNGSVERFAHREN EINES KENNZEICHENSCHILDES VOM TYP "DOPPELT OHNE RAND", UND EIN SOLCHES KENNZEICHENSCHILD
METHOD FOR MAKING A RIMLESS DOUBLE LICENCE PLATE AND LICENCE PLATE OBTAINED

(30) Priorité: 16.11.2001 FR 0114835
(43) Date de publication de la demande: 11.08.2004
(73) Titulaire: Fabricauto-Essarauto, 71000 Macon (FR)
(72) Inventeur: COMBAZ, Laurent, F-69003 Lyon (FR)
(74) Mandataire: Jolly, Jean-Pierre
(86) Numéro de dépôt international: PCT/FR2002/003917
(87) Numéro de publication internationale: WO 2003/042001

(56) Documents cités:
- FR-A- 2 341 907
- FR-A- 2 691 684
- FR-A- 2 693 963

## Description

L'invention concerne un procédé de fabrication d'une plaque minéralogique de type double sans bordure, et la plaque minéralogique obtenue, à savoir comportant une plaque support épaisse et une plaque fine de surface éventuellement recouverte d'un film rétro-réfléchissant, les caractères étant formés par emboutissage de la plaque support et par découpe de la plaque de surface pour laisser apparaître à l'endroit du caractère découpé la couleur de la plaque support se détachant de la couleur de fond de la plaque fine.

L'assemblage de la plaque fine sur la plaque support est habituellement réalisé en périphérie par insertion du bord de la plaque fine dans un rebord formé sur la plaque épaisse et délimitant le cadre de la zone de caractères.

Néanmoins, un tel cadre délimitant la zone de caractères nécessite relativement à la zone utile de caractères un dimensionnement plus grand de la plaque minéralogique.

On connaît par le brevet FR 2 341 907 un procédé de fabrication d'une plaque d'immatriculation de type double pour véhicule automobile, selon le préambule de la revendication 1. Dans ce procédé on rabat les bords de la plaque arrière épaisse sur le devant des bords de la plaque fine avant pour former avec les coins découpés un cadre rectangulaire délimitant la zone des caractères, Néanmoins, une telle plaque, outre qu'elle délimite autour de la zone de caractères, une zone d'encadrement importante, présente l'inconvénient d'être vandalisable facilement par insertion d'une lame, par exemple de tournevis, entre le rebord avant de la plaque épaisse et la plaque fine de surface. De plus, le pliage de la plaque épaisse ne se prête pas à des découpes de plaque à format non rectangulaire, par exemple comportant une bavette inférieure arrondie, car si l'on veut suivre la découpe arrondie de bavette, on ne peut éviter de faire apparaître des zones plissées sur le rebord de la plaque épaisse et qui sont inesthétiques.

L'invention a pour but de remédier à ces inconvénients et propose un procédé de fabrication d'une plaque minéralogique de type double pour l'immatriculation des véhicules notamment, caractérisé en ce qu'il consiste successivement à :
- découper une plaque support épaisse aux dimensions très légèrement inférieures à celles de la plaque minéralogique à réaliser ;
- découper une plaque fine de surface, à un format légèrement supérieur à celui de la plaque support épaisse, et
- à rabattre le bord de la plaque fine derrière le bord de la plaque support épaisse.

Le rabattement de la plaque fine autour du bord de la plaque épaisse est effectué selon un premier pliage du bord de la plaque fine autour de la plaque épaisse, à un angle de pliage inférieur à 90°, la plaque épaisse servant éventuellement de gabarit, puis selon un second pliage du bord de la plaque fine autour du bord de la plaque épaisse en le rabattant vers l'intérieur, à un angle supérieur à 90°, et en effectuant une opération de presse sur la plaque minéralogique, sur sa face arrière, de manière à rabattre complètement le bord de la plaque fine derrière la plaque épaisse.

De façon avantageuse, des zones de réduction du rebord de plaque fine sont découpées aux endroits de discontinuité du profil de la périphérie de la plaque fine, par exemple aux quatre coins de celle-ci, ou sur les zones d'arrondis de la bavette inférieure, de manière à diminuer l'effet de plissage du pliage du rebord de la plaque fine sur la plaque épaisse à ces divers endroits de discontinuité du profil.

Il est à noter que cette disposition rend presque impossible le vandalisme de la plaque par enlèvement de la plaque fine de son support, d'une part en raison de la difficulté à insérer un outil de type tournevis entre les deux parties et d'autre part, en raison de la fixation de la plaque sur la carrosserie automobile par sa face arrière.

Une pâte étanche, éventuellement de colle, peut être interposée entre le rebord de plaque fine et le bord de plaque épaisse. Une telle pâte empêche notamment toute remontée de l'humidité entre la plaque épaisse et la plaque fine.

L'invention concerne également la plaque minéralogique réalisée selon le procédé défini précédemment. Une telle plaque minéralogique présente un aspect épuré sans effet de cadre en relief délimitant la zone de caractères de la plaque, et avec une surface rétroréfléchissante de plaque fine avant agrandie au maximum pour une visibilité optimale de la zone de caractères.

L'invention est illustrée ci-après à l'aide d'un exemple de réalisation et en référence aux dessins annexés sur lesquels :
La figure 1 est une vue de face de la plaque minéralogique réalisée selon l'invention ;
La figure 2 est une vue arrière de la plaque minéralogique selon l'invention ;
La figure 3 est une vue agrandie du détail III de la figure 1 correspondant à la zone de réduction du rebord de coin, sur la face arrière de la plaque minéralogique réalisée ; et
La figure 4 montre les étapes de réalisation de la plaque.

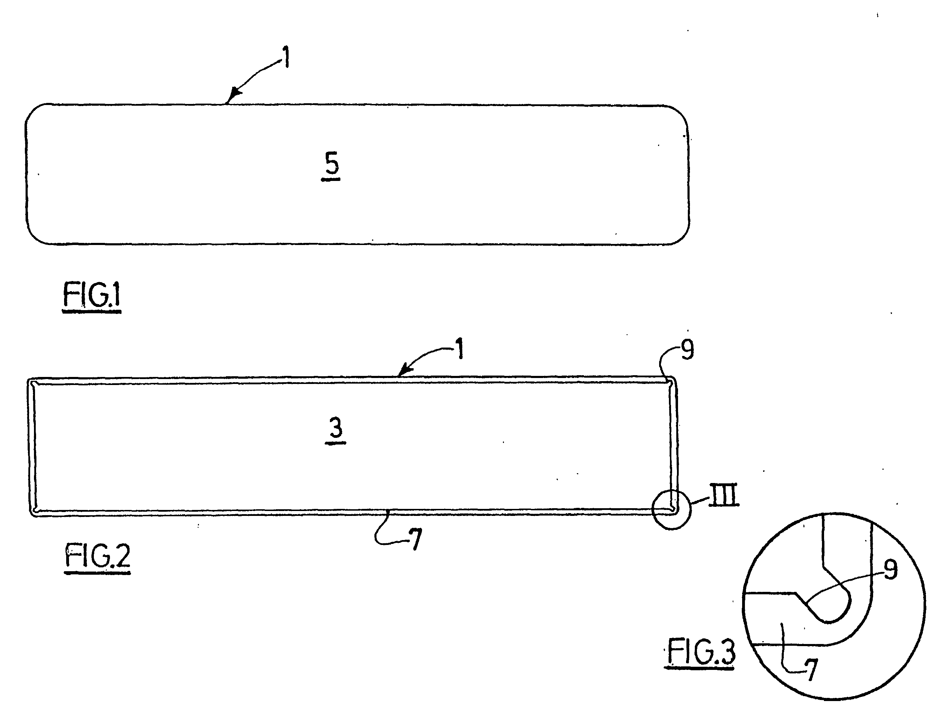

Une plaque minéralogique 1, pour l'immatriculation des véhicules selon l'invention, est représentée à la figure 1. Sa face avant est plane et elle ne présente pas de bordure en saillie ou de partie d'encadrement périphérique comme les plaques minéralogiques usuelles. Elle est constituée d'une plaque support épaisse 3, visible sur la face arrière (figure 2) et d'une plaque éventuellement réflectorisée fine de surface 5. Ces plaques sont en aluminium, d'épaisseur par exemple entre 0,8 mm et 1,6 mm pour la plaque épaisse 3 et entre 0,15 et 0,3 mm pour la plaque fine avant 5.

La plaque fine 5 est colorée, portant la couleur de fond, de laquelle se détachent les caractères d'immatriculation (non représentés) formés ultérieurement et de façon classique par estampage.

Le format en dimension de la plaque épaisse 3 est également classique selon la norme imposée par la réglementation à une marge de tolérance près. Dans le cas présent, elle est rectangulaire. Les quatre coins sont largement arrondis, identiques l'un de l'autre.

La plaque fine de surface 5 est également rectangulaire, étant découpée à un format légèrement supérieur à celui de la plaque épaisse 3, par exemple supérieur de 10 mm en largeur et 10 mm en longueur à celui de la plaque épaisse, valeur correspondant à deux fois la hauteur du rebord 7 (formé régulièrement à l'arrière) plus deux fois l'épaisseur de la plaque épaisse. Le rebord arrière 7 de la plaque fine, de hauteur environ, par exemple, 3,5 mm, s'étend en ligne droite sur chacun des côtés de la plaque.

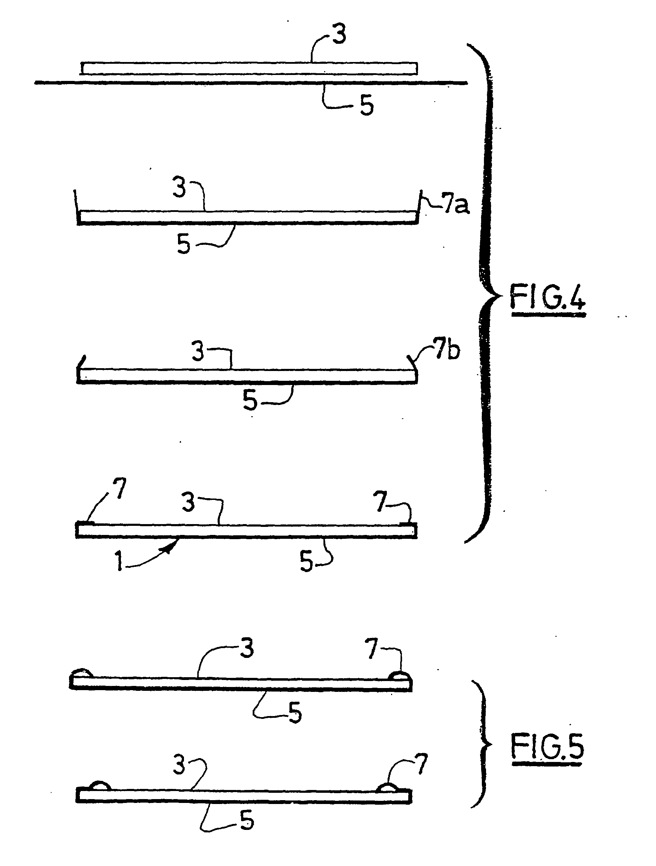

Dans chacun des coins de la plaque fine est découpée une zone de réduction de matière 9 qui, après pliage, aura une forme de U et dont la hauteur est, par exemple, d'environ 2 mm. Le U est orienté à 45° des côtés. Le U est en outre ouvert vers l'extérieur et revient après rabattement vers l'intérieur comme on le voit le mieux sur la vue arrière agrandie de la figure 3. Cette réduction de matière a pour but de diminuer l'effet de plissage du rebord 7 de la plaque après rabattement, bien qu'il soit non visible lorsque la plaque est fixée sur la carrosserie automobile.

L'assemblage des plaques, initialement sous forme plane, est à présent décrit. On utilise pour cela des outils de presse et par exemple un outil combiné à parties amovibles sur les deux premières phases de pliage et un poinçon plat dans la dernière phase de rabattement du rebord.

La plaque fine 5 est d'abord disposée centrée relativement à la plaque épaisse 3.

La plaque épaisse 3 sert éventuellement dans un premier temps comme gabarit de pliage, étant en appui sur une plaque d'appui fixe (non représentée). Un outil développé en creux, évasé et à pans tournés à 110° vers l'ouverture et de format périphérique sensiblement celui de la plaque épaisse, est amené sur la plaque fine, de façon centrée. Il est enfoncé à force sur l'ensemble de façon à ce que ses pans descendent de chaque côté de la plaque épaisse. Ce faisant, il déforme la plaque fine selon un plan incliné continu de bord 7a, complémentaire de celui de l'outil et orienté à 80° du plan de la plaque, comme représenté en phase 1.

Dans un second temps, un second outil ou l'outil précédent revient vers l'intérieur avec des parties mobiles, juste au-dessus de la plaque épaisse pour poursuivre le pliage périphérique régulier 7b, par exemple à 115° du plan de la plaque, comme représenté en phase 2.

Il ne reste plus qu'à donner un coup de presse terminal sur le bord 7b pour l'aplatir complètement, en rabattement sur le plan arrière de la plaque épaisse. La plaque minéralogique est alors assemblée, prête à être numérotée comme représentée au bas de la figure 4.

Il est à noter, à titre de variante de réalisation, que le rebord 7 pourrait être conformé selon un profil de section transversal variable et, par exemple arrondi, s'appliquant par son extrémité élastiquement sur le plan arrière de la plaque épaisse 3.

Par ailleurs, en raison de l'absence de cadre, le format de la plaque pourrait être réduit à celui de la zone de caractères ou proche, et donc avec économie de matière ou en raison de l'absence de cadre, la zone utile de la plaque, éventuellement réflectorisée, peut-être optimisée en étant augmentée jusqu'aux dimensions totales de la plaque.

## Revendications

1. Procédé de fabrication d'une plaque minéralogique (1) de type double pour l'immatriculation des véhicules notamment, **caractérisé en ce qu'**il consiste successivement à :
- découper une plaque support épaisse (3) aux dimensions très légèrement inférieures à celles de la plaque minéralogique (1) à réaliser ;
- découper une plaque fine de surface (5), à un format légèrement supérieur à celui de la plaque support épaisse (3), et
- à rabattre le bord (7) de la plaque fine (5) derrière le bord de la plaque support épaisse (3).

2. Procédé de fabrication d'une plaque minéralogique (1) selon la revendication 1, **caractérisé en ce que** le rabattement de la plaque fine (5) autour du bord de la plaque épaisse (3) est effectué selon un premier pliage (7a) du bord de la plaque fine (5) autour de la plaque épaisse (3), à un angle de pliage inférieur à 90°, la plaque épaisse (3) servant éventuellement de gabarit, puis selon un second pliage (7b) du bord de la plaque fine (5) autour du bord de la plaque épaisse (3) en le rabattant vers l'intérieur, à un angle supérieur, à 90° et en effectuant une opération de presse sur la plaque minéralogique (1), sur sa face arrière, de manière à rabattre complètement le bord (7) de la plaque fine (5) derrière la plaque épaisse (3).

3. Procédé de fabrication d'une plaque minéralogique (1) selon l'une des revendications 1, 2, **caractérisé en ce que** le rabattement du bord (7) de la plaque fine (5) est régulier sur toute la périphérie de la plaque (1), par exemple à une hauteur sensiblement constante.

4. Procédé de fabrication d'une plaque minéralogique (1) selon l'une des revendications 1 ou 2, **caractérisé en ce que** des zones de réduction (9) du bord (7) de la plaque fine (5) sont découpées aux endroits de discontinuité du profil de la périphérie de la plaque fine (5), par exemple aux quatre coins de celle-ci, ou sur les zones d'arrondi de la bavette inférieure, de manière à diminuer l'effet de plissage du pliage du bord (7) de la plaque fine (5) sur la plaque épaisse (3) à ces divers endroits de discontinuité du profil.

5. Procédé de fabrication d'une plaque minéralogique (1) selon la revendication 4, **caractérisé en ce que** lesdites réductions (9) du bord (7) sont à forme de U ouvert vers l'intérieur après rabattement.

6. Procédé de fabrication d'une plaque minéralogique (1) selon l'une des revendications précédentes, **caractérisé en ce qu'**une pâte étanche, éventuellement de colle, est interposée entre le bord (7) de la plaque fine (5) et le bord de la plaque épaisse (3).

7. Procédé de fabrication d'une plaque minéralogique (1) selon l'une des revendications précédentes, **caractérisé en ce que** le bord arrière (7) de la plaque fine (5) a une hauteur réduite, par exemple de 3,5 mm.

8. Procédé de fabrication d'une plaque minéralogique (1) selon l'une des revendications précédentes, **caractérisé en ce que** ledit bord (7) est conformé selon un profil de section transversal variable et, par exemple arrondi, s'appliquant par son extrémité élastiquement sur le plan arrière de la plaque épaisse (3).

9. Plaque minéralogique (1), notamment pour l'immatriculation des véhicules, de type double, **caractérisée en ce qu'u**n bord (7) d'une plaque fine de surface (5) formant la face avant de la plaque minéralogique (1) est rabattu à l'arrière d'une plaque support épaisse (3) formant la face arrière de la plaque minéralogique (1).

10. Plaque minéralogique (1) selon la revendication 9, **caractérisée en ce que** le format de la plaque minéralogique (1) est réduit à celui de la zone de caractères ou proche, ou **en ce que** la zone utile de la plaque fine de surface (5), éventuellement réflectorisée, est augmentée jusqu'aux dimensions totales de la plaque minéralogique (1).

## Patentansprüche

1. Verfahren zur Herstellung eines Nummernschildes (1) vom Typ "doppelt", für die Zulassung von Fahrzeugen, **gekennzeichnet durch** die folgenden aufeinander folgenden Schritte:
Ausschneiden einer dicken Stützplatte (3), deren Abmessungen geringfügig kleiner bemessen sind als diejenigen des herzustellenden Nummernschildes (1),
Ausschneiden einer dünnen Platte, mit einer Oberfläche (5), deren Format geringfügig größer als dasjenige der dicken Stützplatte (3) bemessen ist und
Umschlagen der Berandung (7) der dünnen Platte (5) auf die Berandung der Rückseite der dicken Stützplatte (3).

2. Verfahren zur Herstellung eines Nummernschildes (1) gemäß Anspruch 1, **dadurch gekennzeichnet, dass** das Umschlagen der dünnen Platte (5) um die Berandung der dicken Stützplatte (3) in einer ersten Faltung (7a) der Berandung der dünnen Platte (5) um die dicke Platte (3) nach Maßgabe eines Faltungswinkels von weniger als 90° bewirkt wird, wobei die dicke Stützplatte (3) eventuell als Schablone dient, dass das Umschlagen anschließend in einer zweiten Faltung (7b) der Berandung der dünnen Platte (5) um die Berandung der dicken Platte (3) bewirkt wird, indem erstere zur Innenseite hin umgeschlagen wird, und zwar nach Maßgabe eines Winkels von mehr als 90° und dass über eine Pressung der Rückseite des Nummernschildes (1) die Berandung (7) der dünnen Platte (5) vollständig gegen die dicke Stützplatte (3) umgeschlagen wird.

3. Verfahren zur Herstellung eines Nummernschildes (1) nach einem der Ansprüche 1 oder 2, **dadurch gekennzeichnet, dass** das Umschlagen der Berandung (7) der dünnen Platte (5) entlang der gesamten Peripherie der Platte (1) gleichförmig ausgeführt wird, z.B. nach Maßgabe einer im Wesentlichen konstanten Höhe.

4. Verfahren zur Herstellung eines Nummernschildes (1) nach einem der Ansprüche 1 oder 2, **dadurch gekennzeichnet, dass** in der Berandung (7) der dünnen Platte (5) Ausnehmungsbereiche (9) an Unstetigkeitsstellen des Profils der Peripherie der Platte (5) eingeschnitten werden, beispielsweise an deren vier Ecken oder in abgerundeten unteren Bereichen, um eine Faltenbildung während der Faltung der Berandung (7) der dünnen Platte (5) auf die dicke Platte (3) an diesen unterschiedlichen, ein unstetiges Profil aufweisenden Stellen zu vermindern.

5. Verfahren zur Herstellung eines Nummernschildes (1) nach Anspruch 4, **dadurch gekennzeichnet, dass** die genannten Ausnehmungen (9) der Berandung (7) eine U-förmige, zur Innenseite nach erfolgtem Umschlagen offene Gestalt aufweisen.

6. Verfahren zur Herstellung eines Nummernschildes (1) nach einem der vorangegangenen Ansprüche, **dadurch gekennzeichnet, dass** eine Dichtungsmasse, bestehend eventuell aus Klebstoff, zwischen der Berandung (7) der dünnen Platte (5) und der Berandung der dicken Platte (3) vorgesehen ist.

7. Verfahren zur Herstellung eines Nummernschildes (1) nach einem der vorangegangenen Ansprüche, **dadurch gekennzeichnet, dass** die rückseitige Berandung (7) der dünnen Platte (5) eine verminderte Höhe beispielsweise von 3,5 mm aufweist.

8. Verfahren zur Herstellung eines Nummernschildes (1) nach einem der vorangegangenen Ansprüche, **dadurch gekennzeichnet, dass** die genannte Berandung (7) nach Maßgabe eines variablen Querschnittsprofils, beispielsweise abgerundet ausgebildet ist und sich über ihren elastischen äußeren Rand gegen die rückseitige Ebene der dicken Platte (3) legt.

9. Nummernschild (1), insbesondere zur Zulassung von Fahrzeugen, vom Typ "doppelt", **dadurch gekennzeichnet, dass** eine Berandung (7) der Oberfläche (5) einer dünnen Platte, welche die Vorderseite des Nummernschildes (1) bildet, auf die Rückseite einer dicken Stützplatte (3) umgeschlagen ist, welche die Rückseite des Nummernschildes (1) bildet.

10. Nummernschild (1) nach Anspruch 9, **dadurch gekennzeichnet, dass** das Format des Nummernschildes (1) auf dasjenige der Schriftzone oder diesem angenähert beschränkt ist und dass die von der Oberfläche (5) nutzbare Zone, die eventuell rückstrahlend ausgebildet ist, bis zu den vollständigen Abmessungen des Nummernschildes (1) vergrößert ausgebildet ist.

## Claims

1. Method of manufacturing a double licence plate (1), especially for vehicle registration, **characterised in that** it consists successively in:
- cutting out a thick support plate (3) having dimensions very slightly smaller than those of the licence plate (1) to be produced;
- cutting out a fine surface plate (5) having a format slightly larger than that of the thick support plate (3), and
- folding down the edge (7) of the fine plate (5) behind the edge of the thick support plate (3).

2. Method of manufacturing a licence plate (1) according to claim 1, **characterised in that** the fine plate (5) is folded down around the edge of the thick plate (3) by means of a first folding (7a) of the edge of the fine plate (5) around the thick plate (3) at a folding angle of less than 90°, the thick plate (3) possible serving as a template, then by means of a second folding (7b) of the edge of the fine plate (5) around the edge of the thick plate (3), by folding it down towards the inside, at an angle of more than 90°, and by carrying out a pressing operation on the licence plate (1) on its rear face, so as to completely fold down the edge (7) of the fine plate (5) behind the thick plate (3).

3. Method of manufacturing a licence plate (1) according to one of claims 1, 2, **characterised in that** the fold of the edge (7) of the fine plate (5) is regular over the entire periphery of the plate (1), for example of a substantially constant height.

4. Method of manufacturing a licence plate (1) according to one of claims 1 or 2, **characterised in that** the reduction areas (9) of the edge (7) of the fine plate (5) are cut out at the points of discontinuity of the profile of the periphery of the fine plate (5), for example at the four corners of the latter, or on the rounded areas of the lower mudguard, so as to reduce the pleating effect of the folding of the edge (7) of the fine plate (5) onto the thick plate (3) at these various points of discontinuity of the profile.

5. Method of manufacturing a licence plate (1) according to claim 4, **characterised in that** the said reductions (9) of the edge (7) are in the shape of a U open towards the inside after folding-down.

6. Method of manufacturing a licence plate (1) according to one of the preceding claims, **characterised in that** an impermeable paste, possibly glue, is interposed between the edge (7) of the fine plate (5) and the edge of the thick plate (3).

7. Method of manufacturing a licence plate (1) according to one of the preceding claims, **characterised in that** the rear edge (7) of the fine plate (5) has a reduced height, for example of 3.5 mm.

8. Method of manufacturing a licence plate (1) according to one of the preceding claims, **characterised in that** the said edge (7) is shaped with a profile of variable cross-section, for example rounded, fitting resiliently via its end on the rear surface plane of the thick plate (3).

9. Double licence plate (1), especially for vehicle registration, **characterised in that** an edge (7) of a fine surface plate (5) forming the front face of the licence plate (1) is folded down to the rear of a thick support plate (3) forming the rear face of the licence plate (1).

10. Licence plate (1) according to claim 9, **characterised in that** the format of the licence plate (1) is reduced to that of the area of characters or close to same, or **in that** the useful area of the fine surface plate (5), possibly with a rear reflector, is increased up to the total dimensions of the licence plate (1).
